Europäisches Patentamt

European Patent Office

Office européen des brevets

(11) Veröffentlichungsnummer: **0 019 868**
**B1**

(12) # EUROPÄISCHE PATENTSCHRIFT

(45) Veröffentlichungstag der Patentschrift:
04.08.82

(21) Anmeldenummer: **80102870.5**

(22) Anmeldetag: **23.05.80**

(51) Int. Cl.³: **A 23 L 1/10**, A 23 L 1/172, A 21 D 2/00

(54) **Verfahren zum Aktivieren von Brotgetreide.**

(30) Priorität: **29.05.79 DE 2921682**

(43) Veröffentlichungstag der Anmeldung:
**10.12.80 Patentblatt 80/25**

(45) Bekanntmachung des Hinweises auf die Patenterteilung:
**04.08.82 Patentblatt 82/31**

(84) Benannte Vertragsstaaten:
**AT BE CH FR GB IT LI LU NL SE**

(56) Entgegenhaltungen:
**DE-A-1 692 752**
**DE-A1-2 420 910**
**DE-A1-2 527 945**
**DE-A1-2 808 652**

(73) Patentinhaber: **Lieken-Batscheider Mühlen- und Backbetriebe GmbH, Ingelheimstrasse 1-3, D-6500 Mainz (DE)**

(72) Erfinder: **Meuser, Friedr, Dr., Am Eichenhain 52, D-1000 Berlin 28 (DE)**
Erfinder: **Schubert, Karl, Gerhard-van-der-Poll-Strasse 9, D-2807 Achim (DE)**

(74) Vertreter: **Hoormann, Walter, Dr. et al, FORRESTER & BOEHMERT Widenmayerstrasse 4/I, D-8000 München 22 (DE)**

## Verfahren zum Aktivieren von Brotgetreide

Die Erfindung betrifft ein Verfahren zum Aktivieren von zur Brotherstellung dienendem Getreide, bei dem die ganzen Getreidekörner angefeuchtet und in feuchtem Zustand thermisch konditioniert werden.

Es ist bekannt, daß die Getreideinhaltsstoffe dadurch in ihrem vollen Wert und Masseanteil in verbesserter Weise der Ernährung zugänglich gemacht werden können, daß vor der Verarbeitung der Getreidekörner eine hydrothermische Aktivierung erfolgt. Dabei wird in der Weise vorgegangen, daß die Getreidekörner zunächst sorgfältig gereinigt, dabei angefeuchtet und anschließend im feuchten Zustand einer thermischen Konditionierung unterworfen werden. Diese Konditionierung führt zu einer Aktivierung des Getreidestoffwechsels, wobei es zur natürlichen Vitaminisierung, ganz allgemein zur biologischen Qualitätserhöhung des Getreides, einer natürlichen Anreicherung von wichtigen Aminosäuren sowie insgesamt zu einer für die menschliche Ernährung positiven Veränderung der Vitamin- und Mineralstoffverteilung des Getreides kommen soll (DE-A-2 420 910; DE-A-1 692 752). Allgemein wird bei den bekannten Verfahren zur Aktivierung der Korninhaltsstoffe davon ausgegangen, daß die hydrothermische Konditionierung bei Temperaturen erfolgen muß, die deutlich oberhalb der Raumtemperatur liegen, wobei als besonders bevorzugt Konditionierungstemperaturen von ca. 40°C angesehen werden.

Es hat sich gezeigt, daß der bei herkömmlichen Aktivierungsverfahren (Schäfer, W., Altrogge, L., »Wissenschaft und Praxis der Getreidekonditionierung«, Detmold: Moritz Schäfer 1960) unter Verwendung der als optimal angesehenen erhöhten Konditionierungstemperaturen von oberhalb 25°C, vorzugsweise ca. 35 bis 40°C, erzielbare Aktivierungsgrad noch unbefriedigend ist.

Der Erfindung liegt daher die Aufgabe zugrunde, ein Verfahren der eingangs genannten Art zu schaffen, welches zu einer verbesserten Aktivierung der Korninhaltsstoffe führt.

Erfindungsgemäß wird diese Aufgabe dadurch gelöst, daß die Konditionierung bei einer Temperatur zwischen 10°C und 20°C erfolgt.

Besonders bevorzugte Ausführungsformen der Erfindung ergeben sich aus den Unteransprüchen. Es hat sich insbesondere bewährt, Konditionierungstemperaturen von deutlich unterhalb 20°C, vorzugsweise von ca. 14°C, zu wählen, da hierdurch optimale Aktivierungsgrade erhalten werden können.

Der Erfindung liegt die überraschende Erkenntnis zugrunde, daß es in völligem Gegensatz zur bisherigen einhelligen Meinung der Fachwelt, die davon ausging, daß eine Aktivierung der Getreideinhaltsstoffe nur bei erhöhten Temperaturen befriedigend durchgeführt werden könne, gelingt, wesentlich höhere Aktivierungsgrade als bei dem bekannten Verfahren zu erhalten, wenn in der erfindungsgemäßen Weise die Konditionierung in Form einer »Kühlaktivierung« bei Temperaturen erfolgt, die deutlich unterhalb Raumtemperatur liegen. Umfangreiche Vergleichsversuche haben ergeben, daß Getreidekörner, die nach dem erfindungsgemäßen Verfahren kühlaktiviert worden sind, einen wesentlich höheren Aktivierungsgrad, beispielsweise gemessen als Wachstumsgeschwindigkeit des Blattkeimes und als α-Amylaseaktivität der konditionierten Getreidekörner, aufweisen, als nach herkömmlichen Verfahren bei erhöhter Temperatur konditioniertes Brotgetreide.

Die Erfindung wird nachstehend anhand von Ausführungsbeispielen erläutert.

### Beispiel 1

5 kg Weizenkörner, gereinigt, wurden in 90 Minuten bei Raumtemperatur auf einen Feuchtigkeitsgehalt des Keimlings und der Kornrandschichten von ca. 40 Gew.-% mit Wasser benetzt. Anschließend wurden die Weizenkörner gasdicht in Kunststoffolie eingeschweißt und daraufhin im Wasserbad drei Stunden lang bei 18°C konditioniert. Anschließend wurden die Getreidekörner aus der Kunststoffolie herausgenommen und 90 Minuten lang bei einer Umgebungstemperatur von 38°C auf einen Gesamt-Restwassergehalt von ca. 16 Gew.-% getrocknet.

Die auf diese Weise behandelten Getreidekörner zeigten, ausgedrückt als Wachstumsgeschwindigkeit des Blattkeims, einen relativen Aktivierungsgrad von ca. 152%. Die gemessene α-Amylaseaktivität betrug, gemessen als prozentuale Extinktionsänderung, 130%.

Demgegenüber zeigte ein Vergleichsversuch, bei dem bei ansonsten gleichen Bedingungen die Konditionierungstemperatur 40°C betrug, nur einen relativen Aktivierungsgrad von 95% und eine α-Amylaseaktivität von 100%.

### Beispiel 2

Es wurde vorgegangen wie in Beispiel 1, wobei jedoch bei dreistündiger Konditionierungszeit, eine Konditionierungstemperatur von 14°C gewählt wurde. Dabei zeigten sich ein relativer Aktivierungsgrad von 180% und eine α-Amylaseaktivität von 180%.

### Beispiel 3

Es wurde wie in Beispiel 2 vorgegangen, wobei aber die Konditionierungszeit sechs Stunden betrug, bei unveränderter Konditionierungstemperatur von 14°C. Der relative Aktivierungsgrad betrug hier 175%, die $\alpha$-Amylaseaktivität 305%.

Die Ergebnisse einiger Vergleichsversuche sind in den Diagrammen I und II wiedergegeben, wobei das Diagramm I den prozentualen relativen Aktivierungsgrad in Abhängigkeit von der Konditionierungszeit und das Diagramm II die $\alpha$-Amylaseaktivität in Abhängigkeit von der Konditionierungszeit angibt.

### Einfluß der Arbeitsparameter auf die Aktivierung des Weizens

Diagramm I

### $\alpha$- Amylaseaktivität in Abhängigkeit von der Konditionierungszeit

Diagramm II

Das Diagramm I zeigt deutlich, daß eine Konditionierungstemperatur von 14°C im Vergleich zu den herkömmlichen Konditionierungstemperaturen von beispielsweise 40°C eine drastische Verbesserung des relativen Aktivierungsgrades mit sich bringt. Dasselbe Ergebnis läßt sich auch aus Diagramm II ablesen. Demgegenüber lassen die Diagramme erkennen, daß die Konditionierungszeit — insbesondere das Diagramm I ist hier zu beachten — nur einen geringeren Einfluß auf den Aktivierungsgrad hat, wobei Diagramm I insbesondere erkennen läßt, daß nach Aktivierungs- bzw. Konditionierungszeiten von etwa drei Stunden bereits optimal hohe Aktivierungsgrade erreichbar sind.

## Patentansprüche

1. Verfahren zum Aktivieren von zur Brotherstellung dienendem Getreide, bei dem die ganzen Getreidekörner angefeuchtet und in feuchtem Zustand thermisch konditioniert werden, dadurch gekennzeichnet, daß die Konditionierung bei einer Temperatur zwischen 10°C und 20°C erfolgt.

2. Verfahren nach Anspruch 1, dadurch gekennzeichnet, daß die Konditionierungstemperatur höchstens 16°C beträgt.

3. Verfahren nach Anspruch 2, dadurch gekennzeichnet, daß die Konditionierungstemperatur ca. 14°C beträgt.

4. Verfahren nach einem der vorangehenden Ansprüche, dadurch gekennzeichnet, daß das der thermischen Konditionierung vorangehende Anfeuchten der Getreidekörner durch Benetzen mit Wasser bei einer Temperatur von höchstens 20°C erfolgt.

5. Verfahren nach Anspruch 4, dadurch gekennzeichnet, daß die Anfeuchttemperatur mit der Konditionierungstemperatur übereinstimmt.

6. Verfahren nach Anspruch 4 oder 5, dadurch gekennzeichnet, daß die Getreidekörner bei der Anfeuchttemperatur 30 bis 120 Minuten lang mit Wasser benetzt werden.

7. Verfahren nach Anspruch 6, dadurch gekennzeichnet, daß die Anfeuchtezeit ca. 90 Minuten beträgt.

8. Verfahren nach einem der Ansprüche 4 bis 7, dadurch gekennzeichnet, daß die Getreidekörner beim Benetzen auf einen Wassergehalt des Keimlings und der äußeren Kornrandschichten von ca. 40 Gew.-% angefeuchtet werden.

9. Verfahren nach einem der vorangehenden Ansprüche, dadurch gekennzeichnet, daß die Getreidekörner nach dem Konditionieren vor der Weiterverarbeitung auf einen Gesamtwassergehalt von höchstens 20 Gew.-% getrocknet werden.

10. Verfahren nach Anspruch 9, dadurch gekennzeichnet, daß die Getreidekörner nach dem Konditionieren vor der Weiterverarbeitung auf einen Gesamtwassergehalt von ca. 16 Gew.-% getrocknet werden.

11. Verfahren nach Anspruch 9 oder 10, dadurch gekennzeichnet, daß das Trocknen der Getreidekörner in einem Zeitraum von 30 bis 90 Minuten erfolgt.

12. Verfahren nach Anspruch 11, dadurch gekennzeichnet, daß die Trockenzeit ca. 60 Minuten beträgt.

13. Verfahren nach einem der Ansprüche 9 bis 12, dadurch gekennzeichnet, daß das Trocknen bei einer Temperatur von weniger als 40°C erfolgt.

14. Verfahren nach einem der vorangehenden Ansprüche, dadurch gekennzeichnet, daß die Konditionierungszeit zwischen zwei und neun Stunden beträgt.

15. Verfahren nach Anspruch 14, dadurch gekennzeichnet, daß die Konditionierungszeit weniger als sieben Stunden beträgt.

16. Verfahren nach Anspruch 15, dadurch gekennzeichnet, daß die Konditionierungszeit ca. sechs Stunden beträgt.

17. Verfahren nach Anspruch 15, dadurch gekennzeichnet, daß die Konditionierungszeit ca. drei Stunden beträgt.

## Claims

1. A process for the activation of grain used for bread manufacture, in which all the grain particles are moistened and thermally conditioned while moist, characterised in that conditioning is carried out at a temperature between 10°C and 20°C.

2. A process according to claim 1, characterised in that the conditioning temperature is not more than 16°C.

3. A process according to claim 2, characterised in that the conditioning temperature is about 14°C.

4. A process according to any one of the preceding claims, characetrised in that the moistening of the grain particles prior to thermal conditioning is effected by wetting with water at a temperature of not more than 20°C.

5. A process according to claim 4, characterised in that the moistening temperature is the same as the conditioning temperature.

6. A process according to claim 4 or 5, characterised in that the grain particles are wetted with water at the moistening temperature for 30 to 120 minutes.

7. A process according to claim 6, characterised in that the moistening time is about 90 minutes.

8. A process according to any one of claims 4 to 7, characterised in that the grain particles are wetted to give a moisture content of about 40% by weight in respect of the embryo and the outer edge layers of the particle.

9. A process according to any one of the preceding claims, characterised in that the grain particles are dried to a total water content of not more than 20% by weight after conditioning and before further processing.

10. A process according to claim 9, characterised in that the grain particles are dried to a total water content of about 16% by weight after conditioning and before further processing.

11. A process according to claim 9 or 10 characterised in that drying of the grain particles is effected in a period of from 30 to 90 minutes.

12. A process according to claim 11, characterised in that the drying time is about 60 minutes.

13. A process according to any one of claims 9 to 12, characterised in that drying is effected at a temperature of less than 40° C.

14. A process according to any one of the preceding claims, characterised in that the conditioning time is between two and nine hours.

15. A process according to claim 14, characterised in that the conditioning time is less than seven hours.

16. A process according to claim 15, characterised in that the conditioning time is about six hours.

17. A process according to claim 15, characterised in that the conditioning time is about three hours.

## Revendications

1. Precédé pour activer des céréales servant à la fabrication du pain, dans lequel tous les grains de céréales sont mouillés et conditionnés thermiquement, à l'état mouillé, caractérisé par le fait que le conditionnement a lieu à une température comprise entre 10° C et 20° C.

2. Procédé selon la revendication 1, caractérisé par le fait que la température de conditionnement est au plus de 16° C.

3. Procédé selon la revendication 2, caractérisé par le fait que la température de conditionnement est d'environ 14° C.

4. Procédé selon l'une des revendications précédentes, caractérisé par le fait que le mouillage des grains de céréales précédant le conditionnement thermique, s'effectue par mouillage avec de l'eau à une température de 20° C maximum.

5. Procédé selon la revendication 4, caractérisé par le fait que la température de mouillage coïncide avec la température de conditionnement.

6. Procédé selon la revendication 4 ou 5, caractérisé par le fait que les grains de céréales sont mouillés avec de l'eau pendant 30 à 120 minutes à la température de mouillage.

7. Procédé selon la revendication 6, caractérisé par le fait que la durée du mouillage est d'environ 90 minutes.

8. Procédé selon l'une des revendications 4 à 7, caractérisé par le fait que les grains de céréales, lors du mouillage, sont mouillés jusqu'à une teneur en eau de la plantule et des couches périphériques extérieures du grain d'environ 40% en poids.

9. Procédé selon l'une des revendications précédentes, caractérisé par le fait que les grains de céréales sont séchés, après le conditionnement et avant le traitement ultérieur, jusqu'à une teneur totale en eau de 20% en poids au plus.

10. Procédé selon la revendication 9, caractérisé par le fait que les grains de céréales sont séchés, après le conditionnement et avant le traitement ultérieur jusqu'à une teneur totale en eau d'environ 16% en poids.

11. Procédé selon la revendication 9 ou 10, caractérisé par le fait que le séchage des grains de céréales s'effectue en un laps de temps compris entre 30 et 90 minutes.

12. Procédé selon la revendication 11, caractérisé par le fait que le temps de séchage est d'environ 60 minutes.

13. Procédé selon l'une des revendications 9 à 12, caractérisé par le fait que le séchage s'effectue à une température inférieure à 40° C.

14. Procédé selon l'une des revendications précédentes, caractérisé par le fait que la durée du conditionnement est comprise entre deux et neuf heures.

15. Procédé selon la revendication 14, caractérisé par le fait que la durée du conditionnement est inférieure à sept heures.

16. Procédé selon la revendication 15, caractérisé par le fait que la durée du conditionnement est d'environ 6 heures.

17. Procédé selon la revendication 15, caractérisé par le fait que la durée du conditionnement est d'environ trois heures.